# EUROPÄISCHE PATENTANMELDUNG

(11) **EP 1 489 384 A2**
(43) Veröffentlichungstag der Anmeldung: **22.12.2004**
(21) Anmeldenummer: 04102273.2
(22) Anmeldetag: 25.05.2004
(51) Int. Cl.: G01C 21/36, G08G 1/0968

(54) **Navigationsgerät für Kraftfahrzeuge und Verfahren zur Ausgabe von Verkehrslageinformationen mit einem solchen Navigationsgerät**

(30) Priorität: 17.06.2003 DE 10327188
(71) Anmelder: ROBERT BOSCH GMBH, 70442 Stuttgart (DE)
(72) Erfinder: Kreft, Peter, 30966, Hemmingen (DE)

(57) **Zusammenfassung**

Bei einem Navigationsgerät (1) für Kraftfahrzeuge (8) mit einer Positionsortungseinrichtung (2) zur Bestimmung der aktuellen Ortsposition des Kraftfahrzeuges (8) und mit einer zentralen oder dezentralen Verkehrslagen-Auswertungseinheit (4) zum Empfangen und Auswerten von Verkehrslageninformationen, ist die Verkehrslagen-Auswertungseinheit (4) zur Überprüfung von Verkehrslageinformationen, die für von der aktuellen Ortsposition des Kraftfahrzeuges (8) aus in Fahrtrichtung vor dem Kraftfahrzeug (8) liegende Verkehrswege vorhanden sind, und Ausgabe der Verkehrslageinformationen oder von Warnmeldungen, wenn Verkehrslageinformationen vorliegen, ausgebildet.

## Beschreibung

Die Erfindung betrifft ein Navigationsgerät für Kraftfahrzeuge mit einer Positionsortungseinrichtung zur Bestimmung der aktuellen Ortsposition des Kraftfahrzeugs und mit einer zentralen oder dezentralen Verkehrslagen-Auswertungseinheit zum Empfangen und Auswerten von Verkehrslageinformationen.

Die Erfindung betrifft weiterhin ein Verfahren zur Ausgabe von Verkehrslageinformationen mit einem solchen Navigationsgerät.

Navigationsgeräte für Kraftfahrzeuge, die auf Basis einer ermittelten Fahrzeugposition in der Lage sind, verschiedene Dienste, wie beispielsweise die Berechnung einer Route zu einem Ziel und/oder das Sprechen von Verkehrsmeldungen anzubieten, sind hinreichend bekannt. Auch Navigationsgeräte mit Verkehrslagen-Auswertungseinheit zum Empfangen und Auswerten von Verkehrsmeldungen beispielsweise mit einem TMC-Tuner und Berücksichtigung von Verkehrsmeldungen bei der Routenauswahl beispielsweise zur Stauumfahrung sind bekannt.

In einer Ausführungsform eines herkömmlichen Navigationsgerätes mit Verkehrslagen-Auswertungseinheit ist die Ausgabe von Warnhinweisen in Abhängigkeit vom Routenverlauf zum Ziel realisiert, wenn sich das Kraftfahrzeug einer Verkehrsstörung nähert. Diese Warnhinweise werden dann ausgegeben, wenn bei der Routenoptionswahl die Berücksichtigung von Verkehrsmeldungen bei der Routenwahl deaktiviert wurde oder eine Umfahrung der Verkehrsstörung beispielsweise zeitlich nicht lohnend ist.

Ausgehend von derartigen Navigationsgeräten ist es Aufgabe der vorliegenden Erfindung, ein verbessertes Navigationsgerät für Kraftfahrzeuge zu schaffen, bei denen vor Erreichen einer Verkehrsstörung entsprechende Warnhinweise an den Fahrer ausgegeben werden können.

Diese Aufgabe wird mit dem gattungsgemäßen Navigationsgerät erfindungsgemäß dadurch gelöst, dass die Verkehrslagen-Auswertungseinheit dezentral in dem Navigationsgerät oder zentral in einer Servicezentrale zur Überprüfung von Verkehrslageinformationen, die für von der aktuellen Ortsposition des Kraftfahrzeuges aus in Fahrtrichtung vor dem Kraftfahrzeug liegende Verkehrswege vorhanden sind, und Ausgabe der Verkehrslageinformationen oder von Warnmeldungen, wenn Verkehrslageinformationen vorliegen, ausgebildet ist.

Dieses Navigationsgerät hat den Vorteil, das die Aufmerksamkeit des Fahrers durch die Warnhinweise erhöht wird oder der Fahrer dazu aufgefordert wird, sein Tempo zu drosseln. Im Unterschied zu den herkömmlichen Navigationsgeräten mit Verkehrslagen-Auswertungseinheit werden die Warnhinweise und Verkehrslageinformationen jedoch nicht in Abhängigkeit von einer berechneten Route ermittelt, sondern unabhängig davon ausgehend von der aktuellen Ortsposition in Fahrtrichtung.

Wenn die Verkehrslagen-Auswertungseinheit in einer Servicezentrale realisiert ist, wird die Fahrzeugs-Ortsposition aus dem Fahrzeug zu der Servicezentrale gesendet. Etwaige Verkehrslage-Informationen oder Warnmeldungen werden dann zurück in das Fahrzeug zur Ausgabe übertragen.

Die Verkehrslagen-Auswertung erfolgt vorzugsweise auch im deaktivierten Zustand einer im Navigationsgerät vorhandenen Fahrtroutenermittlungseinrichtung oder einer Einheit, die mit einer zentralen Fahrtroutenermittlungseinrichtung einer Servicezentrale kommuniziert.

Die Überprüfung der Verkehrswege sollte dabei ausgehend von der Fahrzeug-Position vorzugsweise auf eine vom Benutzer festgelegte Suchdistanz begrenzt werden, beispielsweise auf wenige Kilometer.

Wenn die Zielführung des Navigationsgerätes nicht aktiviert ist, zum Beispiel weil der Fahrer Ortskenntnis besitzt, wird der Fahrer dennoch vor dynamischen Verkehrsereignissen gewarnt, von denen das Navigationsgerät Kenntnis hat.

Die Ausgabe der Warnhinweise kann beispielsweise optisch oder akustisch erfolgen.

Bei einem solchen Navigationsgerät wird der Fahrer im Falle einer vorliegenden Verkehrsstörung dann animiert, eine Fahrtroutenermittlungseinrichtung zur Routensuche unter Berücksichtigung der Verkehrsmeldungslage zu aktivieren, um eine optimale Alternativroute berechnen zu lassen.

Die Überprüfung der Verkehrswege erfolgt möglicherweise nur für ein Verkehrswege-Teilnetz. Als Verkehrswege-Teilnetz wird hierbei ein Verkehrswegenetz verstanden, das aus einer einzigen Verkehrswegeart gebildet ist. So stellen beispielsweise Autobahnen ein Autobahnnetz als Verkehrswege-Teilnetz dar. Ebenso kann das Verkehrswege-Teilnetz innerhalb einer digitalen Karte gekennzeichnet sein.

Das Verkehrswege-Teilnetz kann durch die Straßen, auf die sich Verkehrsmeldungen abbilden lassen, gekennzeichnet sein. So ist zum Beispiel das Straßennetz, welchem über TMC Verkehrsmeldungen zugeordnet werden können, gemäß dem ALERT-C-Standard definiert.

Weiterhin ist es vorteilhaft, wenn das Navigationsgerät zur Einschränkung der Suchpfade entlang der vor dem Kraftfahrzeug liegenden Verkehrswege auf mögliche Richtungen und/oder Verkehrswegearten eingeschränkt ist. Von der aktuellen Fahrzeugposition in Fahrtrichtung gesehene Straßen, die über einen definierten Winkel von beispielsweise 90° abbiegen, werden dann nicht bei der Überprüfung berücksichtigt. Ferner kann beim Befahren einer Autobahn die Überprüfung in entsprechender Weise beispielsweise auf die Autobahnen beschränkt sein.

Aufgabe der Erfindung ist es ferner ein verbessertes Verfahren zur Ausgabe von Verkehrslageinformationen mit einem solchen Navigationsgerät zu schaffen.

Die Aufgabe wird mit dem gattungsgemäßen Verfahren erfindungsgemäß mit den aufgrund der fortschreitenden Ortsposition und Zeit wiederholten Schritten gelöst von:
- Bestimmen der aktuellen Ortsposition des Kraftfahrzeuges,
- Überprüfen der von der aktuellen Ortsposition des Kraftfahrzeuges aus in Fahrtrichtung vor dem Kraftfahrzeug liegenden Verkehrswege auf vorhandene Verkehrslageinformationen und
- Ausgeben der Verkehrslageinformationen oder von Warnmeldungen, wenn Verkehrslageinformationen vorliegen.

Wie oben beschrieben kann die Überprüfung der Verkehrswege gleichermaßen auf festgelegte Suchdistanzen, Verkehrswege-Teilnetze und Suchpfade eingeschränkt werden.

Die Erfindung wird nachfolgend anhand der beigefügten Zeichnungen beispielhaft näher erläutert. Es zeigen:
- Figur 1 -: Blockdiagramm eines Navigationsgerätes für Kraftfahrzeuge mit Positionsortungseinrichtung, Fahrtroutenermittlungseinrichtung und Verkehrslagen-Auswertungseinheit;
- Figur 2 -: Skizze eines Verkehrswegeabschnitts mit der aktuellen Ortsposition eines Kraftfahrzeuges, einem Verkehrsstau auf einem Verkehrsweg und einem Suchpfad zur Ermittlung des Verkehrsstaus und Ausgabe einer Warnmeldung;
- Figur 3 -: Skizze eines Verkehrswegeabschnitts mit der aktuellen Ortsposition eines Kraftfahrzeuges, einem Verkehrsstau auf einem Verkehrsweg und zwei Suchpfaden entlang der befahrenen Verkehrswegeart.

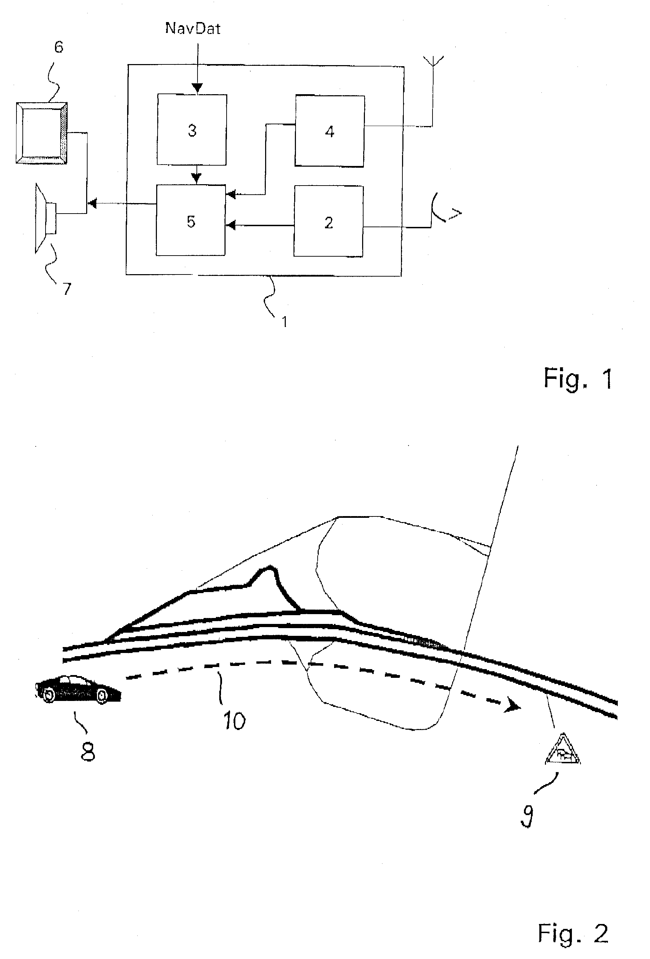

Die Figur 1 lässt ein Navigationsgerät 1 als Blockdiagramm mit einer Positionsortungseinrichtung 2 erkennen, die beispielsweise mit einem Global-Positioning-System GPS arbeitet. Weiterhin ist eine Fahrtroutenermittlungseinrichtung 3 zur Berechnung optimierter Routen von einem Startpunkt zu einem Zielpunkt auf Basis von Navigationsdaten NavDat vorgesehen. Die Navigationsdaten NavDat können in bekannter Weise aus einer mit dem Navigationsgerät 1 verbundenen CD-ROM ausgelesen werden. Es ist aber auch denkbar, dass die Navigationdaten NavDat über Funk von einer externen Servicezentrale geliefert werden, die beispielsweise auch die Routenberechnung übernehmen kann. Die Fahrtroutenermittlungseinrichtung 3 ist dann dezentral in der Servicezentrale realisiert, wobei das Navigationsgerät 1 Mittel zur Kommunikation mit der dezentralen Fahrtroutenermittlungseinrichtung 3 und Weiterbearbeitung der Navigationsdaten NavDat hat.

Die Fahrtroutenermittlungseinrichtung 3 arbeitet in bekannter Weise mit einem digitalisierten Netz in Form von Knoten und Kanten, denen sich typischer Weise Verkehrslageinformationen mit Hilfe einer Verkehrslagen-Auswertungseinheit 4 zuordnen lassen. In den folgenden Beispielen sei angenommen, dass die Verkehrsmeldungen Netzkanten zugeordnet werden. Die Zuordnung zu Netzknoten würde analog erfolgen.

Die Verkehrslageinformationen können beispielsweise über den Traffic-Message-Channel TMC ausgewertet werden, über den zum Beispiel via Radio-Data-System RDS Verkehrslagemeldungen von Radiosedern ausgestrahlt werden. Diesen Verkehrslageinformationen werden in der Verkehrslagen-Auswertungseinheit 4 beispielsweise über Referenzlisten Straßenabschnitte und/oder Straßenknotenpunkte zugeordnet, die dann im Navigationsgerät 1 entsprechend gekennzeichnet werden. Die Zuordnung der Verkehrslageinformationen erfolgt in Abhängigkeit von der Verkehrswegeart, beispielsweise der Straßenklasse "Autobahn".

Insbesondere für den Fall, dass die Routenberechnung in einer Servicezentrale vorgenommen wird, ist es vorteilhaft, wenn auch die Verkehrslagen-Auswertungseinheit 4 zentral in der Servicezentrale ausgeführt wird, da dort die digitale Straßenkarte vorliegt. Das Navigationsgerät 1 hat dann entsprechende Mittel zur Kommunikation mit der zentralen Verkehrslagen-Auswertungseinheit 4 und zum Empfangen von Warnmeldungen

Das Navigationsgerät 1 hat eine Steuereinheit 5, in denen die optimierten Routen und Verkehrslageinformationen zusammengeführt und optisch über ein Display 6 oder akustisch über das Lautsprechersystem 7 des Kraftfahrzeugs ausgegeben werden.

Im deaktivierten Zustand der Fahrtroutenermittlungseinrichtung 3 erfolgt nun durch die Verkehrslagen-Auswertungseinheit 4 und die Steuereinheit 5 eine Überprüfung der von der aktuellen Ortsposition des Kraftfahrzeuges aus in Fahrtrichtung von dem Kraftfahrzeug liegenden Verkehrswege auf vorhandene Verkehrslageinformationen und eine Ausgabe von Warnmeldungen, wenn Verkehrslageinformationen vorliegen, über das Display 6 oder das Lautsprechersystem 7. Dies wird anhand von Beispielen nachfolgend näher beschrieben.

Die Figur 2 lässt ein beispielhaftes Verkehrswegenetz erkennen, wobei das den Verkehrslageinformationen zuzuordnende Verkehrswege-Teilnetz ein Autobahnnetz sei. Die Straßen des Autobahnnetzes sind fett gezeichnet. Eine Einschränkung auf das Autobahnnetz ist aber nicht zwingende Voraussetzung.

Das vor dem Kraftfahrzeug 8 liegende Straßennetz wird auf eine durch den Benutzer festgelegte Suchdistanz von beispielsweise 1000 Meter auf mögliche Verkehrsstörungen 9 mit Hilfe der Verkehrslagen-Auswertungseinheit 4 durchsucht. Hierzu werden die Autobahnnetzkanten von der aktuellen Ortsposition des Fahrzeugs 8 Netzkante für Netzkante in Fahrtrichtung, d. h. in Richtung des schwarzen Pfeils, so lange durchsucht, bis eine einer Netzkante zugeordnete Verkehrsmeldung gefunden oder die Suchdistanz überschritten wurde.

Wird eine Verkehrslageinformation über eine Verkehrsstörung 9 innerhalb der Suchdistanz detektiert, so wird eine entsprechende akustische und/oder optische Warnung an den Fahrer ausgegeben.

Dieses Verfahren wird mit fortschreitender Ortsposition des Kraftfahrzeuges 8 und mit fortschreitender Zeit wiederholt. das Kraftfahrzeug hohe Geschwindigkeiten erreicht und somit die Reaktionszeit des Fahrers besonders gering ist, insbesondere auf Autobahnen.

In dem dargestellten Beispiel ist durch eine geeignete Logik im Navigationsgerät 1 die Anzahl der Suchpfade 10 nach Verkehrsstörungen im aktuellen Straßennetz eingeschränkt. Beispielsweise wird die Suche innerhalb eines Suchpfades 10 dann abgebrochen wenn die befahrene Straßenklasse bzw. Verkehrswegeart (Autobahn) verlassen wird. Es erfolgt somit keine Suche außerhalb des befahrenen Verkehrswege-Teilnetzes, das durch die zugehörige Verkehrswegeart gebildet ist. Der Suchpfad entlang des befahrenen Verkehrsweges (Autobahn) wird jedoch wie in der Figur 2 dargestellt, über die Anschlussstelle hinweg weiterverfolgt. Der Blick hinter die Anschlussstelle entlang der Autobahn ist hierbei besonders vorteilhaft, da bei rechtzeitiger Erkennung einer Verkehrsstörung der Fahrer noch die Möglichkeit hat, die Autobahn im Falle einer gravierenden Verkehrsstörung 9 zu verlassen. Da Verkehrsmeldungen im Traffic-Message-Channel TMC typischer Weise von Anschlussstelle zu Anschlussstelle gemeldet werden, genügt in diesem Fall eine Suche bis zur Netzkante hinter die Autobahnanschlussstelle, um zu erkennen, ob auf dem folgenden Autobahnabschnitt bis zur nächsten Abfahrtmöglichkeit eine Verkehrsstörung 9 vorliegt.

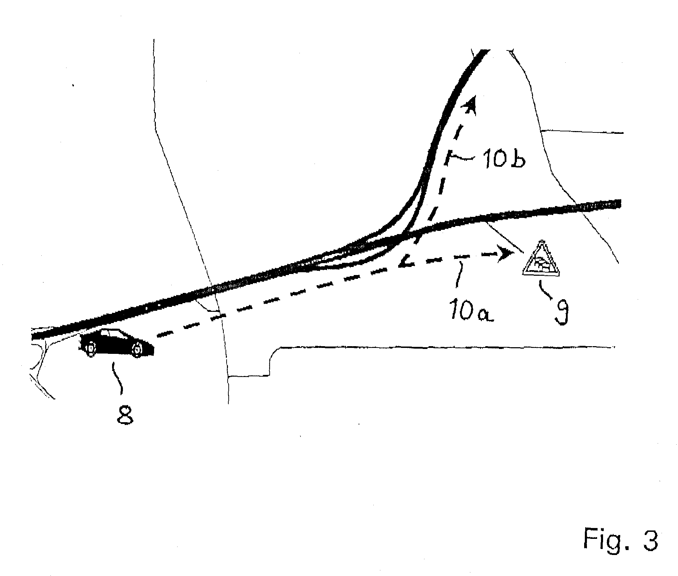

Die Figur 3 lässt ein anderes Beispiel eines Autobahn-Teilnetzes an einem Autobahndreieck erkennen. Dort gibt es zwei zukünftige Fahrverlauf-Alternativen entlang der im Beispiel relevanten Autobahn. An dieser Stelle werden beide Suchpfade 10a, 10b entlang der Autobahnen für die eingestellte Suchdistanz auf Verkehrsstörungen untersucht, wie durch die beiden schwarzen Pfeile skizziert ist.

Sofern der geplante Fahrtverlauf nicht durch eine im vorausliegenden Straßennetz vorliegende Verkehrsstörung 9 betroffen ist, zum Beispiel weil der Fahrer eine Autobahnabfahrt fahren oder auf eine andere Autobahn wechseln wollte, so ist die Ausgabe des Warnhinweises unkritisch, da eine erhöhte Aufmerksamkeit des Fahrers unschädlich ist und er sich weitere Informationen über die Verkehrslage über bekannte Funktionen des Navigationssystems beschaffen kann.

Die Ausgabe von Warnmeldungen oder Verkehrslageinformationen mit Hilfe von Suchpfaden im digitalisierten Straßennetz hat den Vorteil, dass nur relevante Verkehrsmeldungen erkannt werden, die in der Nähe der aktuellen Ortsposition des Kraftfahrzeuges 8 existieren. Verkehrsmeldungen, die keine Bedeutung haben, weil zu von der Fahrzeug-Ortsposition im Straßennetz ihnen keine kurze Fahrbahnverbindung existiert, wie beispielsweise auf kreuzenden Brücken oder Gegenfahrbahnen. Aus diesem Grunde ist die Überprüfung der Verkehrswege in beschriebener Weise eingeschränkt.

## Patentansprüche

1. Navigationsgerät (1) für Kraftfahrzeuge (8) mit einer Positionsortungseinrichtung (2) zur Bestimmung der aktuellen Ortsposition des Kraftfahrzeuges (8) und mit einer zentralen oder dezentralen Verkehrslagen-Auswertungseinheit (4) zum Empfangen und Auswerten von Verkehrslageinformationen, **dadurch gekennzeichnet, dass**
die Verkehrslagen-Auswertungseinheit (4) zur Überprüfung von Verkehrslageinformationen, die für von der aktuellen Ortsposition des Kraftfahrzeuges (8) aus in Fahrtrichtung vor dem Kraftfahrzeug (8) liegende Verkehrswege vorhanden sind, und Ausgabe der Verkehrslageinformationen oder Warnmeldungen, wenn Verkehrslageinformationen vorliegen, ausgebildet ist.

2. Navigationsgerät (1) nach Anspruch 1 mit einer Fahrtroutenermittlungseinrichtung (3) zur Berechnung und Ausgabe einer Fahrtroute auf Basis der aktuellen Ortsposition, wobei die Überprüfung von Verkehrslageinformationen und Ausgabe der Verkehrslageinformationen oder Warnmeldungen aus im deaktivierten Zustand der Fahrtroutenermittlungseinrichtung (3) erfolgt.

3. Navigationsgerät (1) nach Anspruch 1 oder 2, **dadurch gekennzeichnet, dass** die Überprüfung der Verkehrswege bis zu einer festgelegten Suchdistanz erfolgt.

4. Navigationsgerät (1) nach einem der vorhergehenden Ansprüche, **dadurch gekennzeichnet, dass** die Überprüfung der Verkehrswege nur für das aktuell befahrene Verkehrswege-Teilnetz erfolgt, wobei ein Verkehrswege-Teilnetz, beispielsweise ein Autobahnnetz, aus einer Verkehrswegeart, beispielsweise Autobahn, gebildet ist.

5. Navigationsgerät (1) nach einem der vorhergehenden Ansprüche, **dadurch gekennzeichnet, dass** das Navigationsgerät (1 ) zur Einschränkung der Suchpfade entlang der vor dem Kraftfahrzeug (8) liegenden Verkehrswege auf mögliche Richtungen und/oder Verkehrswegearten ausgebildet ist.

6. Verfahren zur Ausgabe von Verkehrslageinformationen mit einem Navigationsgerät (1) nach einem der vorhergehenden Ansprüche mit den wiederholten Schritten:
- Bestimmen der aktuellen Ortsposition des Kraftfahrzeugs (8),
- Überprüfen der von der aktuellen Ortsposition des Kraftfahrzeugs (8) aus in Fahrtrichtung vor dem Kraftfahrzeug (8) liegenden Verkehrswege auf vorhandene Verkehrslageinformationen und
- Ausgeben der Verkehrslageinformationen oder von Warnmeldungen, wenn Verkehrslageinformationen vorliegen.

7. Verfahren nach Anspruch 5, **gekennzeichnet durch** Überprüfen der Verkehrswege bis zu einer festgelegten Suchdistanz.

8. Verfahren nach Anspruch 5 oder 6, **gekennzeichnet durch** Überprüfen der Verkehrswege nur für das aktuell befahrene Verkehrswege-Teilnetz, wobei ein Verkehrswege-Teilnetz, beispielsweise ein Autobahnnetz, aus einer Verkehrswegeart, beispielsweise Autobahn gebildet ist.

9. Verfahren nach einem der Ansprüche 5 bis 7, **gekennzeichnet durch** Einschränken der Suchpfaden entlang der vor dem Kraftfahrzeug (8) liegenden Verkehrswege auf mögliche Richtungen und/oder Verkehrswegearten.

10. Verfahren nach einem der Ansprüche 5 bis 8, **dadurch gekennzeichnet, dass** die Überprüfung von Verkehrslageinformationen und Ausgabe der Verkehrslageinformationen oder Warnmeldungen auch erfolgt, wenn die Fahrtroutenermittlungseinrichtung (3) deaktiviert ist.

11. Verfahren nach einem der Ansprüche 5 bis 8, **dadurch gekennzeichnet, dass** die Überprüfung von Verkehrslageinformationen und Ausgabe der Verkehrslageinformationen oder Warnmeldungen auch erfolgt, wenn die Fahrtroutenermittlungseinrichtung (3) deaktiviert ist.

12. Verfahren nach einem der Ansprüche 5 bis 9, **dadurch gekennzeichnet, dass** die Verkehrslagen-Auswertungseinheit (4) in einer Servicezentrale abgebildet ist.
